(19) Europäisches Patentamt
European Patent Office
Office européen des brevets

(11) **EP 2 404 143 B1**

(12) **EUROPÄISCHE PATENTSCHRIFT**

(45) Veröffentlichungstag und Bekanntmachung des Hinweises auf die Patenterteilung:
**12.04.2017  Patentblatt 2017/15**

(21) Anmeldenummer: **10703831.7**

(22) Anmeldetag: **03.02.2010**

(51) Int Cl.:
**G01D 5/347** *(2006.01)*

(86) Internationale Anmeldenummer:
**PCT/EP2010/051290**

(87) Internationale Veröffentlichungsnummer:
**WO 2010/100005 (10.09.2010 Gazette 2010/36)**

(54) **POSITIONSMESSEINRICHTUNG**

POSITION MEASURING DEVICE

DISPOSITIF DE MESURE DE POSITION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **02.03.2009  DE 102009001262**

(43) Veröffentlichungstag der Anmeldung:
**11.01.2012  Patentblatt 2012/02**

(73) Patentinhaber: **Dr. Johannes Heidenhain GmbH 83301 Traunreut (DE)**

(72) Erfinder: **BENNER, Ulrich 83308 Trostberg (DE)**

(56) Entgegenhaltungen:
**EP-A1- 1 852 684      US-A1- 2004 155 178 US-A1- 2005 023 450**

**Beschreibung**

Die vorliegende Erfindung betrifft eine Positionsmesseinrichtung.

Eine Positionsmesseinrichtung ist z.B. aus der US 2005/023450 A1 bekannt. Diese umfasst neben einer Maßverkörperung, z.B. ausgebildet als lineare Reflexions-Maßverkörperung, eine relativ in mindestens einer Messrichtung hierzu verschiebbare Abtasteinheit. Auf Seiten der Abtasteinheit sind eine Primär-Lichtquelle sowie mindestens eine Detektoranordnung in Form eines periodischen Detektorarrays vorgesehen. In der Detektionsebene ist im Fall der Verwendung einer räumlich ausgedehnten Primär-Lichtquelle eine periodische Anordnung von Punktlichtquellen erzeugbar, indem in dieser Ebene ein sog. Sendegitter angeordnet wird. Das Sendegitter besteht aus einer in Messrichtung periodischen Anordnung von lichtdurchlässigen und lichtundurchlässigen Bereichen.

Im Fall der Relativbewegung von Abtasteinheit und Maßverkörperung resultiert in der Detektionsebene ein verschiebungsabhängig moduliertes Streifenmuster, das mittels der Detektoranordnung erfasst und in weiterverarbeitbare Abtastsignale umgewandelt wird. Über die Ausgestaltung der Detektoranordnung in Form eines periodischen Detektorarrays werden hierbei in üblicher Art und Weise mehrere phasenverschobene Abtastsignale erzeugt.

In derartigen Systemen wird in der Regel angestrebt, dass die verwendete Primär-Lichtquelle und die eingesetzte Detektoranordnung möglichst in der gleichen Ebene angeordnet sind. Darüber wird gewährleistet, dass der Abstand zwischen der Primär-Lichtquelle und der Maßverkörperung identisch zum Abstand zwischen der Maßverkörperung und der Detektoranordnung ist. Hierzu wird die Primär-Lichtquelle gemäß der US 2005/023450 A1 unterhalb des Sendegitters in einer zentralen Kavität in einem Trägersubstrat angeordnet. Die Kavität ist von den Detektorelementen des Detektorarrays umgeben. Ein derartiger Aufbau ist jedoch mit signifikantem Fertigungsaufwand verbunden. So muss das Trägersubstrat mit einer geeigneten Kavität ausgebildet werden; die Kontaktierung der Primär-Lichtquelle in der Kavität erweist sich zudem als relativ schwierig.

In der DE 10 2006 021 017 A1 der Anmelderin wird daher vorgeschlagen, die Primär-Lichtquelle an einem anderen Ort in der Abtasteinheit anzuordnen. Im Abtaststrahlengang ist ein geeignetes Reflektorelement vorgesehen, über das eine Abbildung der Primär-Lichtquelle in eine virtuelle Lichtquelle in der Detektionsebene erfolgt. Auf diese Art und Weise kann die Ausbildung einer Kavität vermieden werden und es ergeben sich vielfältigere Möglichkeiten zur Platzierung der Primär-Lichtquelle in der Abtasteinheit.

Die in der DE 10 2006 021 017 A1 vorgeschlagenen Maßnahmen eignen sich zur Lösung der Probleme im Zusammenhang mit der Kavität, wenn als Primär-Lichtquellen Punktlichtquellen, etwa sogenannte VCSEL-Lichtquellen, eingesetzt werden. Stehen derartige Punktlichtquellen nicht zur Verfügung und es müssen räumlich ausgedehnte Primär-Lichtquellen, z.B. LEDs, eingesetzt werden, so sind die in der DE 10 2006 021 017 A1 offenbarten Maßnahmen noch nicht hinreichend, um eine zuverlässige Erzeugung von positionsabhängigen Abtastsignalen sicherzustellen.

Eine weitere Positionsmesseinrichtung ist aus der US 2004/0155178 A1 bekannt. Darin wird vorgeschlagen, durch die Anordnung von transmittiven optischen Elementen zwischen Lichtquelle und Maßverkörperung die geometrisch-räumliche Lage einer virtuellen Punktlichtquelle definiert einzustellen.

Der vorliegenden Erfindung liegt das Problem zugrunde, eine Positionsmesseinrichtung zu schaffen, bei der ausgedehnte Primär-Lichtquellen verwendet werden können und gleichzeitig eine einfache Fertigung der Abtasteinheit gewährleistet ist. Insbesondere die Anordnung der Primär-Lichtquelle in einer Kavität sollte hierbei möglichst vermieden werden.

Diese Aufgabe wird erfindungsgemäß durch eine Positionsmesseinrichtung mit den Merkmalen des Anspruchs 1 gelöst.

Vorteilhafte Ausführungen der erfindungsgemäßen Positionsmesseinrichtung ergeben sich aus den Maßnahmen in den abhängigen Ansprüchen.

Erfindungsgemäß ist nunmehr vorgesehen, die Primär-Lichtquelle oberhalb der Detektionsebene anzuordnen. Auf diese Art und Weise ergeben sich verschiedene Möglichkeiten, wie in der Detektionsebene auch im Fall der Verwendung einer ausgedehnten Primär-Lichtquelle eine periodische Anordnung von Punktlichtquellen erzeugbar ist.

Es lässt sich aufgrund der erfindungsgemäßen Maßnahmen insbesondere vermeiden, eine Kavität im Trägersubstrat auszubilden. Dies bietet aufgrund der deutlich vereinfachten Fertigung der Abtasteinheit Vorteile in Bezug auf die Herstellkosten. So lässt sich die Abtasteinheit automatisiert z.B. in sogenannten Wafer-Level-Packaging-Verfahren herstellen, was auf die erfindungsgemäße Anordnung der Primär-Lichtquelle oberhalb der Detektionsebene zurückzuführen ist. Ferner resultiert ohne eine notwendige Kavität auch eine grundsätzlich höhere Zuverlässigkeit der Detektoranordnung.

In einer vorteilhaften Ausführungsform ist der Primär-Lichtquelle in Richtung der Ausbreitungsrichtung der von der Primär-Lichtquelle emittierten Strahlenbündel ein Sendegitter vorgeordnet. Zwischen dem Sendegitter und der mindestens einen Detektoranordnung ist ferner mindestens ein Optikelement angeordnet, über das eine Abbildung des Sendegitters in die periodische Anordnung von Punktlichtquellen in der Detektionsebene erfolgt.

In der Abtasteinheit kann oberhalb der Detektoranordnung ein Optikmodul angeordnet werden, bestehend aus einem transparenten Trägersubstrat, in welches das Sendegitter als auch das mindestens eine Optikelement integriert ausgebildet ist.

Hierbei kann das Sendegitter als auch das mindestens eine Optikelement auf der Ober- und/oder Unterseite des Trägersubstrats angeordnet sein.

In einer möglichen Variante der vorliegenden Erfindung ist das Sendegitter auf der Oberseite des Trägersubstrats angeordnet. Über dem Sendegitter ist die Primär-Lichtquelle angeordnet, die in Richtung des Sendegitters emittiert, während mindestens ein Optikelement auf der Unterseite des Trägersubstrats angeordnet ist.

Hierbei kann mindestens ein weiteres Optikelement auf der Oberseite des Trägersubstrats in einem Bereich angeordnet werden, der nicht vom Sendegitter belegt ist.

In einer weiteren Variante der vorliegenden Erfindung ist das Trägersubstrat in einem definierten Abstand oberhalb der Detektoranordnung angeordnet. Die Primär-Lichtquelle ist zwischen der Detektoranordnung und dem Trägersubstrat platziert und emittiert in Richtung des Trägersubstrats, während das das Sendegitter auf der Unterseite des Trägersubstrats angeordnet ist und mindestens ein Optikelement auf der Oberseite des Trägersubstrats angeordnet ist.

Hierbei kann mindestens ein weiteres Optikelement auf der Unterseite des Trägerelements in einem Bereich angeordnet werden, der nicht vom Sendegitter belegt ist.

In allen Ausführungsformen und Varianten der vorliegenden Erfindung kann das Optikelement als refraktives oder als diffraktives optisches Element ausgebildet sein.

In einer Variante der vorliegenden Erfindung ist es möglich, dass das Optikelement als Gitterstruktur an der Ober- und/oder Unterseite des Trägersubstrats ausgebildet ist.

Vorzugsweise erfolgt die Abbildung des Sendegitters in eine periodische Anordnung von Punktlichtquellen in der Detektionsebene in einem zentralen Bereich der Detektionsebene, in dem keine Detektoranordnung platziert ist.

In einer weiteren möglichen Ausführungsform der erfindungsgemäßen Positionsmesseinrichtung umfasst die Reflexions-Maßverkörperung eine sich in Messrichtung erstreckende periodische Inkrementalteilung. Das Sendegitter ist als periodisches Gitter ausgebildet und die periodische Anordnung von Punktlichtquellen in der Detektionsebene besitzt eine Periodizität, die dem Doppelten der Periodizität der Inkrementalteilung entspricht. In einer weiteren möglichen Ausführungsform der erfindungsgemäßen Positionsmesseinrichtung umfasst die Reflexions-Maßverkörperung eine sich in Messrichtung erstreckende periodische Inkrementalteilung. Das Sendegitter ist als periodisches Gitter ausgebildet mit einer Periodizität gemäß

$$P_{SG} = 2 \cdot P_M / \beta,$$

wobei

$P_{SG}$ := Periodizität des Sendegitters,
$P_M$ := Periodizität der Inkrementalteilung,
$\beta$ := Abbildungsmaßstab des Optikelements.

Die Primär-Lichtquelle kann in allen Ausführungsformen und Varianten der erfindungsgemäßen Positionsmesseinrichtung als räumlich ausgedehnte Lichtquelle ausgebildet sein.

Weitere Einzelheiten und Vorteile der vorliegenden Erfindung seien anhand der nachfolgenden Beschreibung von Ausführungsbeispielen der erfindungsgemäßen Positionsmesseinrichtung in Verbindung mit den Figuren erläutert.

Es zeigt

Figur 1a      eine schematisierte seitliche Ansicht eines ersten Ausführungsbeispiels der erfindungsgemäßen Positionsmesseinrichtung;

Figur 1b      eine Draufsicht auf die Abtasteinheit der Positionsmesseinrichtung aus Figur 1 a;

Figur 2a      eine vergrößerte Ansicht des Optikmoduls aus Figur 1 zur Erläuterung des Abbildungsstrahlengangs zur Erzeugung der periodischen Anordnung von Punktlichtquellen;

Figur 2b, 2c      jeweils eine Ansicht der Ober- und Unterseite des Optikmoduls aus Figur 2a;

Figur 3a      eine schematisierte Ansicht einer alternativen Variante eines Optikmoduls, wie es im ersten Ausführungsbeispiel der erfindungsgemäßen Positionsmesseinrichtung zum Einsatz kommen kann;

Figur 3b      eine Draufsicht auf das Optikmodul aus Figur 3a;

Figur 4a      eine schematisierte seitliche Ansicht eines zweiten Ausführungsbeispiels der erfindungsgemäßen Positionsmesseinrichtung;

Figur 4b      eine Draufsicht auf die Abtasteinheit der Positionsmesseinrichtung aus Figur 4a;

Figur 5      eine vergrößerte Ansicht des Optikmoduls aus Figur 4a zur Erläuterung des Strahlengangs zur Erzeugung der periodischen Anordnung von Punktlichtquellen;

Figur 6a      eine schematisierte seitliche Absicht einer Positionsmesseinrichtung;

Figur 6b      eine Draufsicht auf die Abtasteinheit der Positionsmesseinrichtung aus Figur 6a.

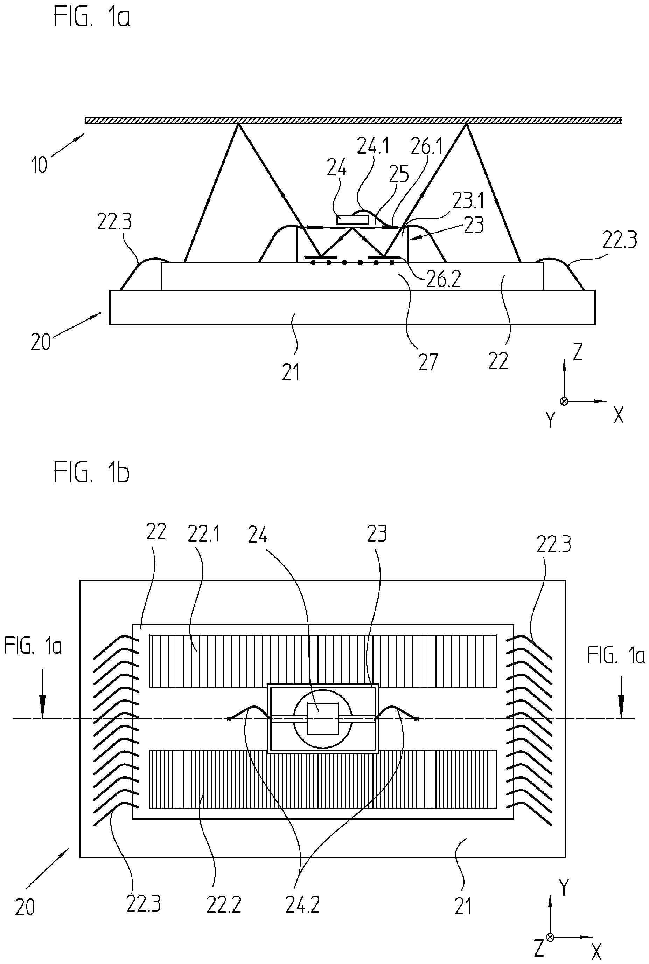

Anhand der Figuren 1 a, 1 b sowie 2a - 2c sei nachfolgend ein erstes Ausführungsbeispiel der erfindungsgemäßen Positionsmesseinrichtung erläutert.

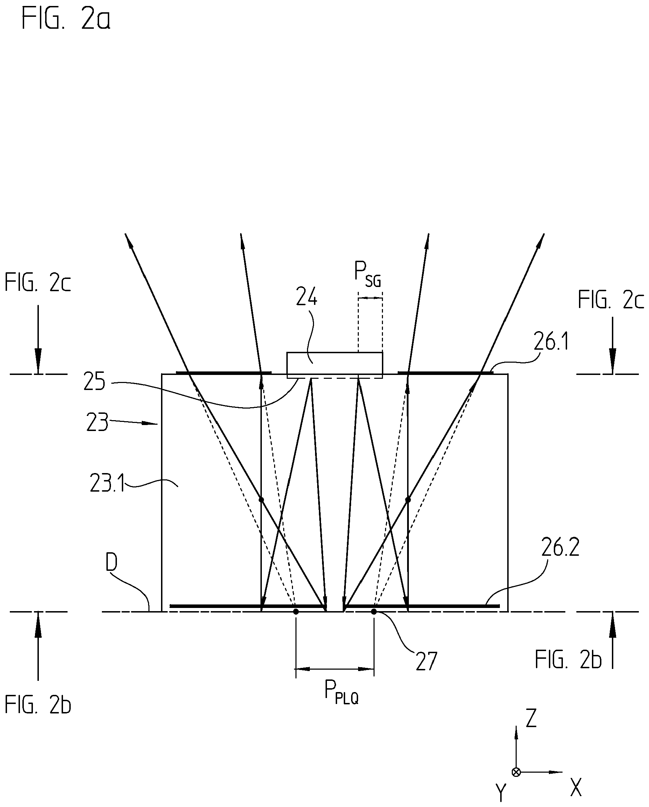

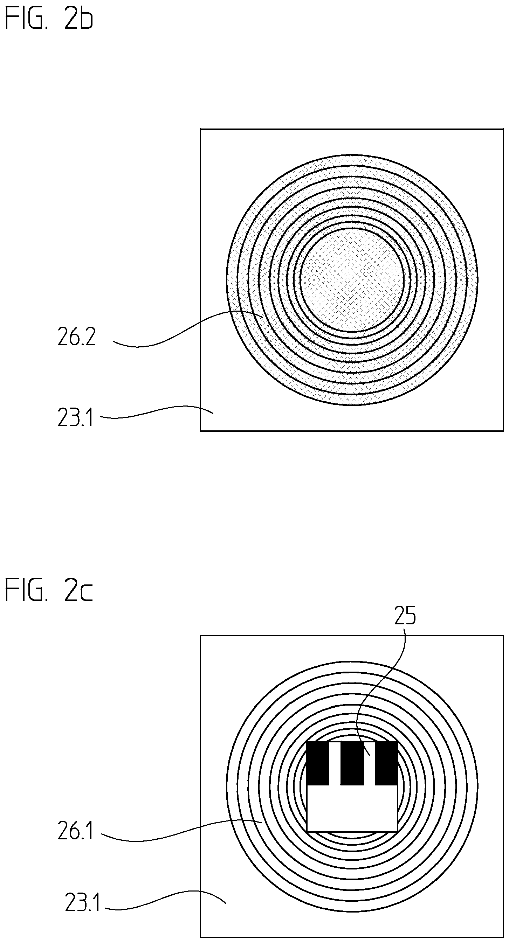

Figur 1a zeigt hierbei eine schematisierte seitliche Ansicht von Teilen der Abtasteinheit 20 und der Reflexions-Maßverkörperung 10 inklusive Abtaststrahlengang, Figur 1b eine Draufsicht auf die Abtasteinheit 20 aus Figur 1a; Figur 2a zeigt eine vergrößerte Ansicht des Optikmoduls aus Figur 1 zur Erläuterung des Strahlengangs zur Erzeugung der periodischen Anordnung von Punktlichtquellen in der Detektionsebene, in den Figuren 2b und 2c sind Ansichten der Ober- und Unterseite des Optikmoduls gezeigt.

Im dargestellten Beispiel umfasst die erfindungsgemäße Positionsmesseinrichtung eine Abtasteinheit 20, die gegenüber einer Reflexions-Maßverkörperung 10 in Messrichtung x beweglich angeordnet ist. Reflexions-Maßverkörperung 10 und Abtasteinheit 20 sind z.B. mit zwei zueinander in Messrichtung x verschiebbar angeordneten Objekten verbunden, etwa zwei zueinander beweglichen Maschinenteilen. Über die positionsabhängigen Ausgangssignale der erfindungsgemäßen Positionsmesseinrichtung kann eine - nicht gezeigte - nachgeordnete Steuereinheit die Bewegung dieser Maschinenteile in bekannter Art und Weise steuern.

Die Reflexions-Maßverkörperung 10 weist im dargestellten Beispiel eine Spur mit einer sich in Messrichtung x erstreckenden periodischen Inkrementalteilung sowie eine parallel dazu angeordnete Spur mit einer Pseudo-Random-Codierung zur Absolutpositions-Detektion auf. Beide Spuren sind auf einem geeigneten Teilungsträger angeordnet, beispielsweise einem Stahlsubstrat.

Die Spur mit der Inkrementalteilung besteht aus periodisch in Messrichtung x angeordneten Teilbereichen mit unterschiedlichen optischen Reflexionseigenschaften. Als Periodizität $P_M$ der Inkrementalteilung sei hierbei die Breite zweier aufeinanderfolgender, unterschiedlicher Teilbereiche in Messrichtung x bezeichnet; im vorliegenden Beispiel wird etwa $P_M = 20 \mu m$ gewählt. Die Teilbereiche erstrecken sich in der Teilungsebene senkrecht zur Messrichtung x, d.h. in der angegebenen y-Richtung. In einem möglichen Ausführungsbeispiel besitzen die Teilbereiche unterschiedliche phasenschiebende Wirkungen auf die hiervon reflektierten Strahlenbündel. Die Reflexions-Maßverkörperung 10 ist in diesem Beispiel demzufolge als sog. Reflexions-Phasengitter ausgebildet. Grundsätzlich sind im Rahmen der vorliegenden Erfindung natürlich auch andere Ausgestaltungs-Varianten für die Reflexions-Maßverkörperung denkbar.

Die Spur mit der Pseudo-Random-Codierung besteht aus aperiodisch in Messrichtung angeordneten Teilbereichen mit unterschiedlichen optischen Reflexionseigenschaften.

Von der Abtasteinheit 20 ist in der stark schematisierten Darstellung der Figuren 1 a und 1 b nur ein Teil erkennbar; üblicherweise umfasst die Abtasteinheit 20 zudem ein geeignetes Gehäuse, in dem die verschiedenen Komponenten derselben angeordnet werden. Dargestellt sind in den Figuren aus Gründen der Übersichtlichkeit nur die für die Erläuterung der vorliegenden Erfindung nötigen Elemente.

Auf Seiten der Abtasteinheit 20 ist auf einer Trägerplatine 21 eine Detektoreinheit 22 mit zwei Detektoranordnungen 22.1, 22.2 platziert. Eine erste Detektoranordnung 22.1 dient zur Abtastung eines periodischen Streifenmusters in der Detektionsebene und zur Erzeugung mehrerer phasenverschobener Inkrementalsignale. Die Detektionsebene D fällt im dargestellten Beispiel im Übrigen mit der Oberseite der Detektoreinheit 22 zusammen. Das abgetastete Streifenmuster resultiert aus der optischen Abtastung der Inkrementalteilung auf der Reflexions-Maßverkörperung 10. Die erste Detektoranordnung 22.1 besteht aus einem bekannten Detektorarray mit einer in Messrichtung x periodischen Anordnung von einzelnen Detektorelementen bzw. Photodioden. Eine zweite Detektoranordnung 22.2 fungiert in bekannter Art und Weise zur Abtastung der in die Detektionsebene projizierten Pseudo-Random-Codierung der zweiten Spur. Über die zweite Detektoranordnung 22.2 ist die Erzeugung mindestens eines Absolutpositionssignals möglich. Die derart erzeugten Inkrementalsignale und Absolutpositionssignale seien nachfolgend der Einfachheit halber nur als Positionssignale bezeichnet.

Die beiden Detektoranordnungen 22.1, 22.2 werden in der vorliegenden ersten Variante der erfindungsgemäßen Positionsmesseinrichtung über Bonddrähte 22.3 elektrisch kontaktiert, d.h. elektrisch leitend mit nicht dargestellten - Leiterbahnen in der Trägerplatine 21 verbunden.

Oberhalb der Detektoranordnungen 22.1, 22.2 ist in der Abtasteinheit 20 in einem zentralen Teilbereich der Detektoranordnungen 22.1, 22.2 ein Optikmodul 23 angeordnet, das aus einem plattenförmigen transparenten Trägersubstrat 23.1 besteht, in welchem verschiedene, noch zu erläuternde Optik-Komponenten integriert ausgebildet sind. Das Optikmodul 23 nimmt im vorliegenden Beispiel nur einen Teil der Gesamtfläche der Detektoranordnung(en) 22.1, 22.2 bzw. der Oberfläche der Detektoreinheit 22 ein, wie dies aus Figur 1 b ersichtlich ist.

Auf der Oberseite des Trägersubstrats 23.1, die der Reflexions-Maßverkörperung 10 zugewandt ist, ist im Optikmodul 23 eine Primär-Lichtquelle 24 platziert. Als Primär-Lichtquelle 24 fungiert in der vorliegenden Erfindung vorzugsweise eine räumlich ausgedehnte Lichtquelle. Dies kann z.B. eine LED sein, die als Halbleiterchip ausgebildet ist. Die Primär-Lichtquelle 24 wird über weitere Bonddrähte 24.1 elektrisch kontaktiert, die auf der Oberseite des Trägersubstrats 23.1 mit entsprechenden Kontakten verbunden sind. Über die Bonddrähte 24.1 werden diese Kontakte mit - nicht gezeigten - Leiterbahnen in der Detektoreinheit 22 verbunden.

Die strahlungsemittierende Fläche der Primär-Lichtquelle 24 ist in Richtung der Unterseite des Trägersubstrats 23 orientiert, d.h. in Richtung der der Reflexions-Maßverkörperung 10 abgewandten Seite des Trägersubstrats 23.1. Die Primär-Lichtquelle 24 strahlt demzufolge weg von der Reflexions-Maßverkörperung 10 in Richtung der Unterseite des Trägersubstrats 23.1.

Auf der Oberseite des Trägersubstrats 23.1 ist ein periodisches Sendegitter 25 angeordnet, das als Durchlicht-Amplitudengitter mit der Periodizität $P_{SG}$ ausgebildet ist; die Periodizität $P_{SG}$ wird in einem möglichen Ausführungsbeispiel gemäß $P_{SG} = 240\mu m$ gewählt. Die Anordnung des Sendegitters 25 erfolgt hierbei so, dass dieses im Strahlengang der von der Primär-Lichtquelle 24 emittierten Strahlenbündel platziert wird.

Ferner sind auf der Ober-und Unterseite des Trägersubstrats 23.1 noch verschiedene im Abtaststrahlengang zwischen dem Sendegitter 25 und den Detektoranordnungen 22.1, 22.2 befindliche Optikelemente 26.1, 26.2 angeordnet, die definierte optische Funktionen übernehmen. So erfolgt über die Optikelemente 26.1, 26.2 im vorliegenden Ausführungsbeispiel die Erzeugung einer periodischen Anordnung von Punktlichtquellen 27 aus der Primär-Lichtquelle 24, wie dies in den Figuren 1 a und 2 schematisch angedeutet ist. Hierzu wird das Sendegitter 25 über die Optikelemente 26.1, 26.2 virtuell in die Detektionsebene D mit den Detektoranordnungen 22.1, 22.2 abgebildet; weitere Einzelheiten zur stattfindenden Abbildung werden nachfolgend noch anhand von Figur 2 erläutert. In der Detektionsebene D resultiert über die Sendegitter-Abbildung ein virtuelles Sendegitter-Bild bzw. eine periodische Anordnung von Punktlichtquellen 27 mit der Periodizität $P_{PLQ}$. Aufgrund des genutzten Abtastprinzips muss für die Periodizität $P_{PLQ}$ gelten:

$$P_{PLQ} = 2 \cdot P_M \qquad (Gl.\ 1)$$

mit

$P_{PLQ}$ := Periodizität der Anordnung von Punktlichtquellen,
$P_M$ := Periodizität der Inkrementalteilung.

Die periodische Anordnung von Punktlichtquellen 27 fungiert dann als eigentliche Lichtquelle bzw. Vielzahl von Lichtquellen für die Abtastung der Reflexions-Maßverkörperung 10. Hierzu treffen die von der periodischen Anordnung von Punktlichtquellen 27 emittierten Strahlenbündel wie in Figur 1 a gezeigt auf die Reflexions-Maßverkörperung 10, werden dort in Richtung der Abtasteinheit 10 zurückreflektiert und gelangen in der Abtasteinheit 20 schließlich auf die in der Detektionsebene platzierten Detektoranordnungen 22.1, 22.2. Im Fall der Relativbewegung von Abtasteinheit 20 und Reflexions-Maßverkörperung 10 resultieren dort verschiebungsabhängige Positionssignale. Im Fall der Inkrementalsignale wird über den erläuterten Abtaststrahlengang und die dabei resultierenden Wechselwirkungen der Strahlenbündel mit der Reflexions-Maßverkörperung 10 ein periodisches Streifenmuster in der Detektionsebene D erzeugt. Dieses wird bei einer erfolgenden Relativbewegung von Abtasteinheit 20 und Reflexions-Maßverkörperung 10 verschiebungsabhängig moduliert und über die Detektoranordnung 22.1 in bekannter Art und Weise in mehrere phasenverschobene Inkrementalsignale zur Weiterverarbeitung umgewandelt.

Maßgeblich ist in dieser ersten Ausführungsform der erfindungsgemäßen Positionsmesseinrichtung wie auch in den noch zu erläuternden Alternativen die Anordnung der verwendeten, räumlich ausgedehnten Primär-Lichtquelle 24 oberhalb der Detektionsebene D. Dadurch kann in diesem Ausführungsbeispiel über die Optikelemente 26.1, 26.2 im Optikmodul 23 eine Abbildung des Sendegitters 25 in ein virtuelles Sendegitterbild bzw. in eine periodische Anordnung von Punktlichtquellen 27 in der Detektionsebene D erfolgen.

Figur 2a zeigt in schematischer Form den Abbildungsstrahlengang für die Abbildung von zwei durchlässigen Teilbereichen des Sendegitters 25 im Optikmodul 23 in die Detektionsebene D. Zunächst gelangen die von der Primär-Lichtquelle 24 emittierten Strahlenbündel auf das an der Oberseite des Trägersubstrats 23.1 angeordnete Sendegitter 25, welches wie oben erwähnt als Transmissions-Amplitudengitter mit der Periodizität $P_{SG}$ = 240$\mu m$ ausgebildet ist. Anschließend durchlaufen die Strahlenbündel das Trägersubstrat 23.1 und gelangen auf die an der Unterseite des Trägersubstrats 23.1 angeordneten Optikelemente 26.2. Die Optikelemente 26.2 sind hierbei als diffraktive optische Elemente in Form von Gitterstrukturen im Trägersubstrat 23.1 ausgebildet, nämlich als Reflexionsgitter. Figur 2b zeigt eine Ansicht der Unterseite des Optikmoduls 23, d.h. des Trägersubstrats 23.1 mit den dort platzierten rotationssymmetrischen reflektierenden diffraktiven Strukturen bzw. dem Optikelement 26.2. Von diesen Optikelementen 26.2 erfolgt eine Rückreflexion der Strahlenbündel in Richtung der Oberseite des Trägersubstrats 23.1 in Teilbereiche, die nicht vom Sendegitter 25 belegt sind und in denen weitere Optikelemente 26.1 angeordnet sind. Die Optikelemente 26.1 auf der Oberseite sind ebenfalls als diffraktive optische Elemente, nämlich als transmittive Gitterstrukturen im Trägersubstrat 23.1 ausgebildet. In Figur 2c sind diese Gitterstrukturen bzw. Optikelemente 26.1 erkennbar, die ebenfalls wieder rotationssymmetrisch zur Primär-Lichtquelle angeordnet sind. Im zentralen Bereich der Oberseite des Trägersubstrats 23.1 ist in Figur 2c das Sendegitter 25 erkennbar. Benachbart zum Sendegitter 25 ist ein Bereich auf der Oberseite des Trägersubstrats 23.1 vorgesehen, der zur Abtastung der PRC-Spur der Reflexions-Maßverkörperung genutzt wird. Von den Gitterstrukturen auf der Oberseite des Optikmoduls 23 erfolgt eine erneute Rückreflexion in Richtung der Unterseite des Trägersubstrats 23.1. Dort resultieren schließlich in der Detektionsebene D zwei virtuelle Bilder der beiden durchlässigen Teilbereiche des Sendegitters 25, d.h. die periodische Anordnung von Punktlichtquellen 27, von der in Figur 2 aus Gründen der besseren Übersichtlichkeit lediglich zwei dargestellt sind. Die Periodizität dieser Anordnung 27 wird wie erwähnt mit $P_{PLQ}$ bezeichnet.

Beim verwendeten Abtastprinzip muss für die Inkrementalsignal-Erzeugung gemäß Gleichung (1) die Periodizität des virtuellen Sendegitterbilds bzw. die Periodizität $P_{PLQ}$ der Anordnung von Punktlichtquellen 27 dem Doppelten der Periodizität $P_M$ der Reflexions-Maßverkörperung 10 entsprechen. Um dieser Randbedingung zu genügen ergibt sich für die Abbildung des Sendegitters 25 die nachfolgende Bedingung (2) für die Periodizität $P_{SG}$ des Sendegitters 25, wenn der Abbildungsmaßstab $\beta$ der Optikelemente 26.1, 26.2 gegeben ist:

$$P_{SG} = 2 \cdot P_M / \beta, \qquad (2)$$

wobei:

    $P_{SG}$ := Periodizität des Sendegitters,
    $P_M$ := Periodizität der Inkrementalteilung,
    $\beta$ := Abbildungsmaßstab des Optikelements.

Analog zu diesen Betrachtungen für den Fall der Abtastung der periodischen Inkrementalteilung ergeben sich natürlich auch bestimmte Anforderungen bei der Abtastung der aperiodischen Strukturen in der PRC-Spur der Reflexions-Maßverkörperung. Zur Abbildung der räumlich ausgedehnten Primär-Lichtquelle in eine virtuelle Punkt-Lichtquelle wird ein Spalt mit der Breite b in Messrichtung vor der Primär-Lichtquelle angeordnet und über ein oder mehrere Optikelemente in die Detektionsebene abgebildet. Als Sendegitter fungiert hier demzufolge der Spalt. Wenn in der PRC-Spur die Ausdehnung des kleinsten Teilbereichs in Messrichtung mit $P_{PRC}$ bezeichnet sei, dann darf unter Anwendung der obigen Überlegungen die Ausdehnung der virtuellen Punktlichtquelle in der Detektionsebene in Messrichtung x maximal das Doppelte von $P_{PRC}$ betragen. Ebenso analog zu den obigen Betrachtungen ergibt sich dann eine erforderliche Breite b des Spalts gemäß Gleichung (3) zu:

$$b = P_{PRC} / \beta, \qquad (3)$$

wobei:

    b := Breite des Spalts in Messrichtung,
    $P_{PRC}$ := Ausdehnung des kleinsten Teilbereichs der PRC-Spur in Messrichtung,
    $\beta$ := Abbildungsmaßstab des Optikelements.

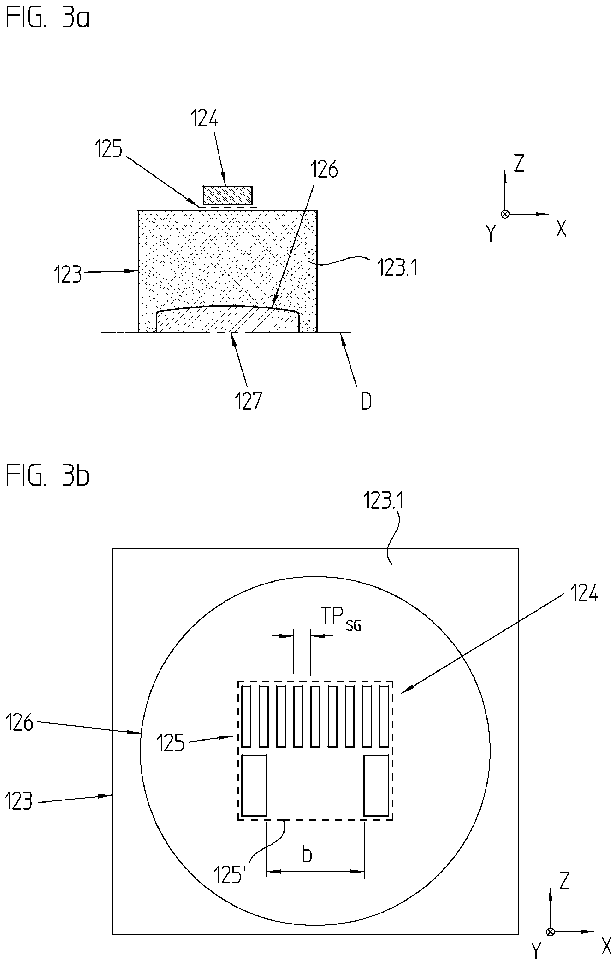

Anhand der Figuren 3a und 3b sei nachfolgend eine alternative Variante eines Optikmoduls beschrieben, das in der ersten Ausführungsform der erfindungsgemäßen Positionsmesseinrichtung zum Einsatz kommen kann. Figur 3a zeigt hierbei eine schematisierte Schnittansicht des Optikmoduls 123; Figur 3b eine Draufsicht auf das Optikmodul 123. Nachfolgend seien lediglich die maßgeblichen Unterschiede zum oben erläuterten Optikmodul beschrieben.

Anstelle die virtuelle Abbildung des Sendegitters 125 vor der Primär-Lichtquelle 124 über verschiedene Optikelemente in Form von diffraktiven Gitterstrukturen vorzunehmen, ist in dieser Variante des Optikmoduls 123 vorgesehen, das Optikelement 126 als refraktives optisches Element an der Unterseite des Trägersubstrats 123.1 auszubilden. Hierzu ist ein in das Trägersubstrat 123 integriertes Reflektorelement vorgesehen, das konkret als Spiegel mit definierter Krümmung ausgebildet ist. Die der Primär-Lichtquelle 124 zugewandte Seite des Optikelements 126 ist demzufolge reflektierend ausgebildet. Über die geeignete Dimensionierung dieses Spiegels kann durch die resultierende Abbildung wiederum ein virtuelles Bild des Sendegitters bzw. eine periodische Anordnung von Punktlichtquellen 127 in der Detektionsebene D erzeugt werden.

In der schematisierten Draufsicht auf die Optikmodul-Variante 123 in Figur 3b ist strichliniert die Position der räumlich ausgedehnten Primär-Lichtquelle 124 auf der Oberseite des Trägersubstrats 123.1 angedeutet. Erkennbar ist in Figur 3b desweiteren das zur Inkremental-Abtastung genutzte Sendegitter 125 mit der Periodizität $TP_{SG}$, das vor der lichtemittierenden Fläche der Primär-Lichtquelle auf der Oberseite des Trägersubstrats 123.1 angeordnet ist. In y-Richtung benachbart zum Sendegitter 125 ist ein Spalt 125' mit der Breite b auf der Oberseite des Trägersubstrats 123.1 angeordnet. Der Spalt 125' dient wie vorab erläutert zur Größenlimitierung bei der Abbildung der räumlich ausgedehnten Primär-Lichtquelle 124 in eine virtuelle Punkt-Lichtquelle in der Detektionsebene D im Rahmen der Abtastung der aperiodischen PRC-Spur der Reflexions-Maßverkörperung.

Die in den Figuren 3a und 3b dargestellte Variante eines Optikmoduls 123 wird wie im vorhergehenden Ausführungsbeispiel oberhalb der Detektoreinheit bzw. den Detektoranordnungen in der Abtasteinheit der erfindungsgemäßen Positionsmesseinrichtung angeordnet.

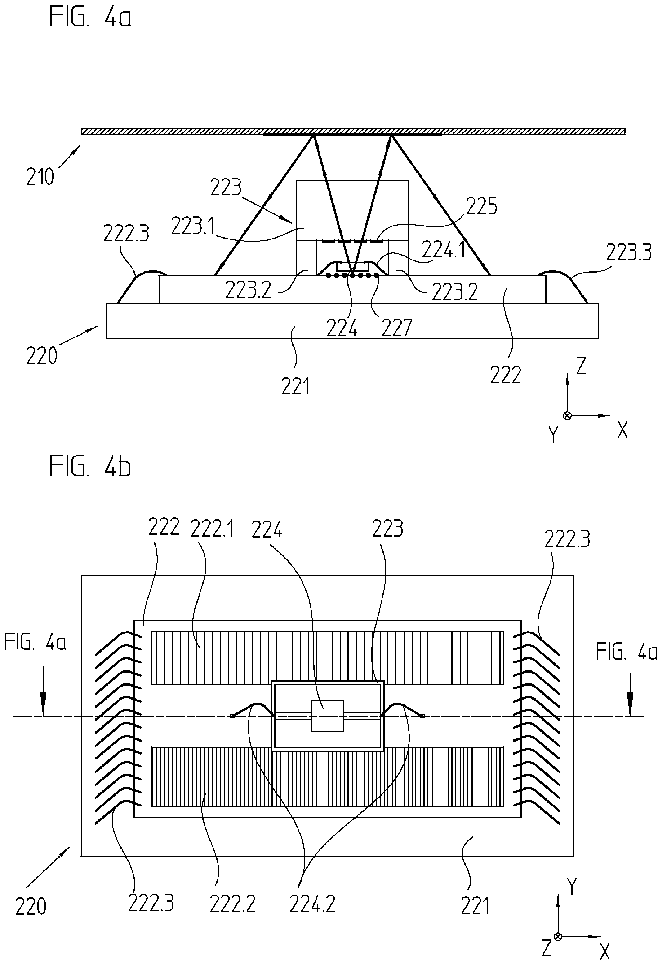

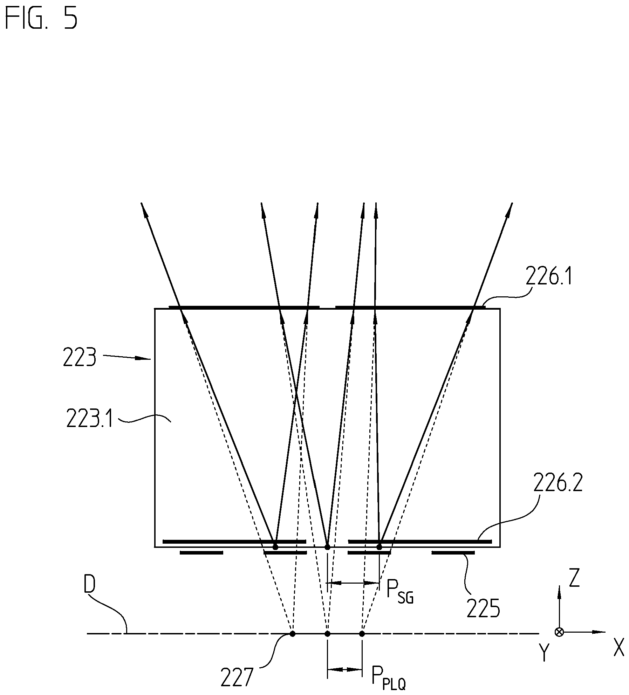

Ein zweites Ausführungsbeispiel der erfindungsgemäßen Positionsmesseinrichtung wird nachfolgend anhand der Figuren 4a, 4b und 5 erläutert; diese zeigen Darstellungen bzw. Ansichten dieser Ausführungsform analog zum ersten Ausführungsbeispiel. Erneut werden lediglich die maßgeblichen Unterschiede zum ersten Ausführungsbeispiel erläutert, ansonsten sei auf die Beschreibung der Figuren 1 a, 1 b und 2 verwiesen.

Die maßgeblichen Unterschiede zum ersten Ausführungsbeispiel liegen in der Anordnung der Primär-Lichtquelle 224 sowie in der Anordnung und Ausgestaltung des Optikmoduls 223. Wie im ersten Ausführungsbeispiel ist jedoch u.a. vorgesehen, die Primär-Lichtquelle 224 oberhalb der Detektionsebene D anzuordnen, die auch in dieser Variante mit der Oberseite der Detektoreinheit 22 zusammenfällt.

Das Optikmodul 223 bzw. das Trägersubstrat 223.1 des Optikmoduls ist nunmehr jedoch in einem definierten Abstand oberhalb der Detektoranordnungen 222.1, 222.2 und demzufolge in einem definierten Abstand oberhalb der Detektionsebene D angeordnet. Hierzu sind in der Abtasteinheit 210 Abstandselemente 223.2 auf nicht genutzten Bereichen der Oberseite der Detektoreinheit 222 vorgesehen, die das Trägersubstrat 223.1 tragen. Die Primär-Lichtquelle 224 ist ferner zwischen den Detektoranordnungen 222.1, 222.2 und dem Trägersubstrat 223.1 des Optikmoduls 223 auf der Oberseite der Detektoreinheit 222 angeordnet. Die Primär-Lichtquelle 224 emittiert in Richtung des Trägersubstrats 223.1 des Optikmoduls 223. Ein wiederum vorgesehenes periodisches Sendegitter 225 ist auf der Unterseite des Trägersubstrats 223.1 angeordnet, die in Richtung der Detektoranordnungen 222.1, 222.2 bzw. der Detektoreinheit 222 orientiert ist. Über nachfolgend noch zu erläuternde Optikelemente im Optikmodul 223 erfolgt wie im ersten Ausführungsbeispiel eine Abbildung des Sendegitters 225 in ein virtuelles Sendegitterbild bzw. in eine periodische Anordnung von Punktlichtquellen 227 in der Detektionsebene D.

Der zugehörige Abbildungsstrahlengang zur Erzeugung des virtuellen Sendegitterbildes ist wiederum in Figur 5 schematisiert gezeigt. Dargestellt sind hierbei die Abbildungsstrahlengänge von drei durchlässigen Teilbereichen des Sendegitters 225, die über die Optikelemente 226.1, 226.2 in eine periodische Anordnung von Punktlichtquellen 227 in der Detektionsebene D abgebildet werden. Die Optikelemente 226.1, 226.2 zwischen dem Sendegitter 225 und der Detektionsebene D sind im Trägersubstrat 223.1 des Optikmoduls 223 wie im obigen Beispiel als diffraktive optische Elemente in Form von Reflexionsgittern bzw. Transmissionsgittern ausgebildet.

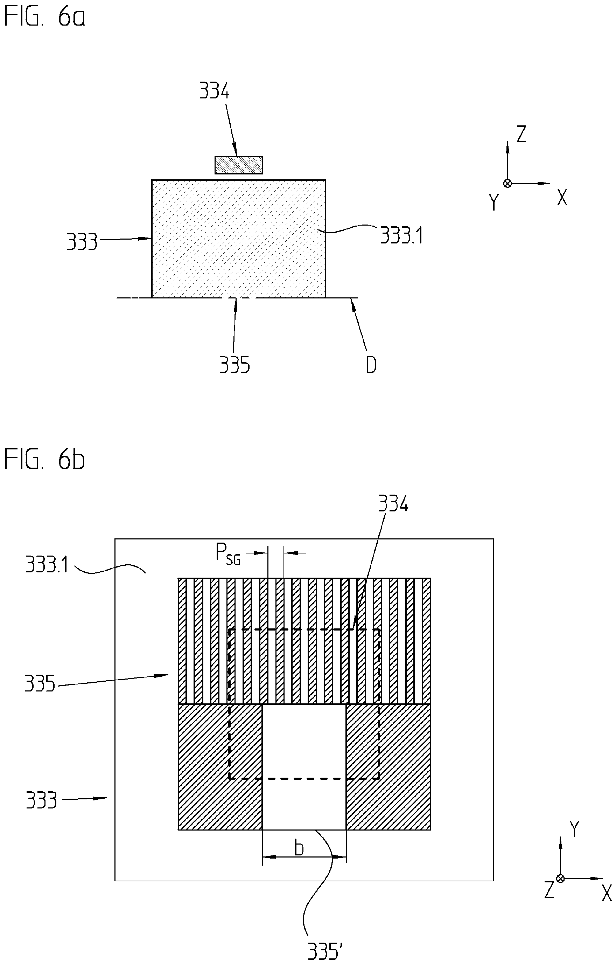

Eine weitere Positionsmesseinrichtung sei abschließend anhand der Figuren 6a und 6b erläutert. Diese zeigen das in der Abtasteinheit eingesetzte Optikmodul 333 in einer seitlichen Schnittansicht sowie in einer Draufsicht. Das Optikmodul 333 wird mit seiner Unterseite unmittelbar auf der Detektoreinheit mit den Detektoranordnungen angeordnet, d.h. die Unterseite des Trägersubstrats ist in der Detektionsebene D angeordnet.

Es ist vorgesehen, dass die Primär-Lichtquelle 334 oberhalb der Detektionsebene D angeordnet ist. Hierbei ist die räumlich ausgedehnte Primär-Lichtquelle 334 auf der Oberseite des Trägersubstrats 333.1 des Optikmoduls platziert und emittiert in Richtung der Detektionsebene D der Abtasteinheit. In die Unterseite des Trägersubstrats 333.1 ist ein periodisches Reflexionsgitter 335 integriert ausgebildet. Da die Unterseite des Trägersubstrats 333.1 in diesem Fall wie erwähnt mit der Detektionsebene D zusammenfällt ist das periodische Reflexionsgitter 335 mit der Periodizität $P_{SG}$ demzufolge real in der Detektionsebene D angeordnet. Durch das real dort platzierte periodische Reflexionsgitter 335 wird demzufolge die periodische Anordnung von Punktlichtquellen in der Detektionsebene D ausgebildet. Eine Abbildung eines realen Sendegitters in ein virtuelles Sendegitterbild über geeignete Optikelemente ist demzufolge nicht erforderlich, um die nötigen Abtast-Voraussetzungen im Fall einer räumlich ausgedehnten Primär-Lichtquelle zu gewährleisten.

In Figur 6b ist eine schematisierte Draufsicht auf das Optikmodul 333 dieser Ausführungsform gezeigt. Mit dem Bezugszeichen 335' ist ein Spalt bezeichnet, der real an Unterseite des Optikmoduls 333 integriert ausgebildet ist und zur Abtastung der PRC-Spur der Reflexions-Maßverkörperung dient.

Dieses Optikmodul 333 ist insbesondere dann vorteilhaft, wenn aufgrund der gegebenen Abtast-Randbedingungen keine größere Aufweitung des auf die Reflexions-Maßverkörperung gerichteten Abtast-Strahlenbündels nötig ist.

Neben den konkret erläuterten Ausführungsbeispielen gibt es im Rahmen der vorliegenden Erfindung selbstverständlich noch weitere Ausgestaltungsmöglichkeiten.

So können die erläuterten Maßnahmen selbstverständlich nicht nur in Positionsmesseinrichtungen zur Erfassung linearer Relativbewegungen eingesetzt werden, sondern auch in rotatorischen Positionsmesseinrichtungen.

Ferner ist es natürlich auch möglich, lediglich eine Inkrementalabtastung erfindungsgemäß auszubilden und auf die oben erwähnte PRC-Abtastung zu verzichten.

**Patentansprüche**

1. Positionsmesseinrichtung zur Erfassung der Relativposition einer Abtasteinheit (20; 220) sowie einer hierzu in mindestens einer Messrichtung (x) beweglichen Reflexions-Maßverkörperung (10; 210), wobei die Abtasteinheit (20; 220) eine Primär-Lichtquelle (24; 124; 224; 334) sowie mindestens eine Detektoranordnung (22.1, 22.2, 222.1, 222.2) in einer Detektionsebene (D) umfasst und in der Detektionsebene (D) aus der Primär-Lichtquelle (24; 124; 224; 334) eine periodische Anordnung von Punktlichtquellen (27; 127; 227) erzeugbar ist, wobei die Primär-Lichtquelle (24; 124; 224; 334) oberhalb der Detektionsebene (D) angeordnet und als räumlich ausgedehnte Lichtquelle ausgebildet ist und wobei

- der Primär-Lichtquelle (24; 124; 224) in Richtung der Ausbreitungsrichtung der von der Primär-Lichtquelle (24; 124; 224) emittierten Strahlenbündel ein Sendegitter (25; 125; 225) vorgeordnet ist, und
- zwischen dem Sendegitter (25; 125; 225) und der Detektoranordnung (22.1, 22.2; 222.1, 222.2) mindestens ein Optikelement (26.1, 26.2; 126; 226.1, 226.2) angeordnet ist, über das eine Abbildung des Sendegitters (25; 125; 225) in die periodische Anordnung von Punktlichtquellen (27; 127; 227) in der Detektionsebene (D) erfolgt.

2. Positionsmesseinrichtung nach Anspruch 1, wobei in der Abtasteinheit (20; 220) oberhalb der Detektoranordnung (22.1, 22.2; 222.1, 222.2) ein Optikmodul (23; 123; 223) angeordnet ist, bestehend aus einem transparenten Trägersubstrat (23.1; 123.1; 223.1), in welches das Sendegitter (25; 125; 225) als auch das mindestens eine Optikelement (26.1, 26.2; 126; 226.1, 226.2) integriert ausgebildet ist.

3. Positionsmesseinrichtung nach Anspruch 2, wobei das Sendegitter (25; 125; 225) als auch das mindestens eine Optikelement (26.1, 26.2; 126; 226.1, 226.2) auf der Ober- und/oder Unterseite des Trägersubstrats (23.1; 123.1; 223.1) angeordnet sind.

4. Positionsmesseinrichtung nach Anspruch 3, wobei

- das Sendegitter (25; 125) auf der Oberseite des Trägersubstrats (23.1; 123.1) angeordnet ist,
- über dem Sendegitter (25; 125) die Primär-Lichtquelle (4; 124) angeordnet ist, die in Richtung des Sendegitters (25; 125) emittiert und
- mindestens ein Optikelement (26.2; 126) auf der Unterseite des Trägersubstrats (23.1; 123.1) angeordnet ist.

5. Positionsmesseinrichtung nach Anspruch 4, wobei mindestens ein weiteres Optikelement (26.1) auf der Oberseite des Trägersubstrats (23.1) in einem Bereich angeordnet ist, der nicht vom Sendegitter (25) belegt ist.

6. Positionsmesseinrichtung nach Anspruch 3, wobei

- das Trägersubstrat (223.1) in einem definierten Abstand oberhalb der Detektoranordnung (222.1, 222.2) angeordnet ist,
- die Primär-Lichtquelle (224) zwischen der Detektoranordnung (222.1, 222.2) und dem Trägersubstrat (223.1) angeordnet ist und in Richtung des Trägersubstrats (223.1) emittiert,

- das Sendegitter (225) auf der Unterseite des Trägersubstrats (223.1) angeordnet ist und
- mindestens ein Optikelement (226.1) auf der Oberseite des Trägersubstrats (223.1) angeordnet ist.

7. Positionsmesseinrichtung nach Anspruch 6, wobei mindestens ein weiteres Optikelement (226.2) auf der Unterseite des Trägerelements (223.1) in einem Bereich angeordnet ist, der nicht vom Sendegitter belegt (225) ist.

8. Positionsmesseinrichtung nach Anspruch 1, wobei das Optikelement (126; 26.1, 26.2; 226.1, 226.2) als refraktives optisches Element oder als diffraktives optisches Element ausgebildet ist.

9. Positionsmesseinrichtung nach Anspruch 3 und 8, wobei das Optikelement (26.1, 26.2; 226.1, 226.2) als Gitterstruktur an der Ober-und/oder Unterseite des Trägersubstrats (23.1; 223.1) ausgebildet ist.

10. Positionsmesseinrichtung nach Anspruch 1, wobei die Abbildung des Sendegitters (25; 125; 225) in eine periodische Anordnung von Punktlichtquellen (27; 127; 227) in der Detektionsebene (D) in einem zentralen Bereich der Detektionsebene (D) erfolgt, in dem keine Detektoranordnung (22.1, 22.2; 222.1, 222.2) platziert ist.

11. Positionsmesseinrichtung nach Anspruch 1, wobei

- die Reflexions-Maßverkörperung (10; 210) eine sich in Messrichtung (x) erstreckende periodische Inkrementalteilung umfasst,
- das Sendegitter (25; 125; 225) als periodisches Gitter ausgebildet ist und
- und dass die periodische Anordnung von Punktlichtquellen (27; 127; 227) in der Detektionsebene (D) eine Periodizität ($TP_{PLQ}$) besitzt, die dem Doppelten der Periodizität ($TP_M$) der Inkrementalteilung entspricht.

12. Positionsmesseinrichtung nach Anspruch 1, wobei

- die Reflexions-Maßverkörperung (10; 210) eine sich in Messrichtung (x) erstreckende periodische Inkrementalteilung umfasst,
- das Sendegitter (25; 125; 225) als periodisches Gitter ausgebildet ist und
- die Periodizität des Sendegitters (25; 125; 225) gemäß

$$P_{SG} = 2 \cdot P_M / \beta$$

gewählt ist, wobei

$P_{SG}$ := Periodizität des Sendegitters,
$P_M$ := Periodizität der Inkrementalteilung,
$\beta$ := Abbildungsmaßstab des Optikelements.

## Claims

1. Position measuring device for capturing the relative position of a scanning unit (20; 220) and of a reflection scale (10; 210) which is movable with respect thereto in at least one measurement direction (x), wherein the scanning unit (20; 220) comprises a primary light source (24; 124; 224; 334) and at least one detector array (22.1, 22.2; 222.1, 222.2) in a detection plane (D) and a periodic arrangement of point light sources (27; 127; 227) is producible in the detection plane (D) from the primary light source (24; 124; 224; 334), wherein the primary light source (24; 124; 224; 334) is arranged above the detection plane (D) and is in the form of a spatially extended light source, and wherein

   - arranged upstream of the primary light source (24; 124; 224) in the direction of the extension direction of the beams emitted by the primary light source (24; 124; 224) is a transmission grating (25; 125; 225), and
   - arranged between the transmission grating (25; 125; 225) and the detector array (22.1, 22.2; 222.1, 222.2) is at least one optics element (26.1, 26.2; 126; 226.1, 226.2), via which the transmission grating (25; 125; 225) is imaged into the periodic arrangement of point light sources (27; 127; 227) in the detection plane (D).

2. Position measuring device according to Claim 1, wherein arranged in the scanning unit (20; 220) above the detector array (22.1, 22.2; 222.1, 222.2) is an optics module (23; 123; 223), consisting of a transparent carrier substrate (23.1; 123.1; 223.1), into which the transmission grating (25; 125; 225) and the at least one optics element (26.1, 26.2; 126; 226.1, 226.2) are integrated.

3. Position measuring device according to Claim 2, wherein the transmission grating (25; 125; 225) and the at least one optics element (26.1, 26.2; 126; 226.1, 226.2) are arranged on the top and/or bottom side of the carrier substrate (23.1; 123.1; 223.1).

4. Position measuring device according to Claim 3, wherein

   - the transmission grating (25; 125) is arranged on the top side of the carrier substrate (23.1; 123.1),
   - arranged over the transmission grating (25;

125) is the primary light source (4; 124), which emits in the direction of the transmission grating (25; 125), and
   - at least one optics element (26.2; 126) is arranged on the bottom side of the carrier substrate (23.1; 123.1).

5. Position measuring device according to Claim 4, wherein at least one further optics element (26.1) is arranged on the top side of the carrier substrate (23.1) in a region which is not covered by the transmission grating (25).

6. Position measuring device according to Claim 3, wherein

   - the carrier substrate (223.1) is arranged at a defined distance above the detector array (222.1, 222.2),
   - the primary light source (224) is arranged between the detector array (222.1, 222.2) and the carrier substrate (223.1) and emits in the direction of the carrier substrate (223.1),
   - the transmission grating (225) is arranged on the bottom side of the carrier substrate (223.1), and
   - at least one optics element (226.1) is arranged on the top side of the carrier substrate (223.1).

7. Position measuring device according to Claim 6, wherein at least one further optics element (226.2) is arranged on the bottom side of the carrier element (223.1) in a region which is not covered by the transmission grating (225).

8. Position measuring device according to Claim 1, wherein the optics element (126; 26.1, 26.2; 226.1, 226.2) is in the form of a refractive optical element or in the form of a diffractive optical element.

9. Position measuring device according to Claims 3 and 8, wherein the optics element (26.1, 26.2; 226.1, 226.2) is in the form of a grating structure on the top and/or bottom side of the carrier substrate (23.1; 223.1).

10. Position measuring device according to Claim 1, wherein the transmission grating (25; 125; 225) is imaged into a periodic arrangement of point light sources (27; 127; 227) in the detection plane (D) in a central region of the detection plane (D) in which no detector array (22.1, 22.2; 222.1, 222.2) is placed.

11. Position measuring device according to Claim 1, wherein

   - the reflection scale (10; 210) comprises a periodic incremental graduation which extends in the measurement direction (x),
- the transmission grating (25; 125; 225) is in the form of a periodic grating, and
- the periodic arrangement of point light sources (27; 127; 227) has in the detection plane (D) a periodicity ($TP_{PLQ}$) which corresponds to twice the periodicity ($TP_M$) of the incremental graduation.

12. Position measuring device according to Claim 1, wherein

- the reflection scale (10; 210) comprises a periodic incremental graduation which extends in the measurement direction (x),
- the transmission grating (25; 125; 225) is in the form of a periodic grating, and
- the periodicity of the transmission grating (25; 125; 225) is selected according to

$$P_{SG} = 2 \cdot P_M / \beta,$$

wherein

$P_{SG}$:= periodicity of the transmission grating,
$P_M$:= periodicity of the incremental graduation,
$\beta$:= imaging scale of the optics element.

**Revendications**

1. Dispositif de mesure de position permettant de déterminer la position relative d'une unité de balayage (20 ; 220) et d'un étalon de réflexion (10 ; 210) mobile par rapport à celle-ci dans au moins une direction de mesure (x), dans lequel l'unité de balayage (20 ; 220) comprend une source lumineuse primaire (24 ; 124 ; 224 ; 334) ainsi qu'au moins un système détecteur (22.1, 22.2 ; 222.1, 222.2) dans un plan de détection (D) et un agencement périodique de sources lumineuses ponctuelles (27 ; 127 ; 227) peut être généré dans le plan de détection (D) à partir de la source lumineuse primaire (24 ; 124 ; 224 ; 334), dans lequel la source lumineuse primaire (24 ; 124 ; 224 ; 334) est située au-dessus du plan de détection (D) et est réalisée sous la forme d'une source lumineuse étendue spatialement et dans lequel

- la source lumineuse primaire (24 ; 124 ; 224) est disposée en amont d'un réseau d'émission (25 ; 125 ; 225) dans la direction de propagation du faisceau de rayons émis par la source lumineuse primaire (24 ; 124 ; 224), et
- au moins un élément optique (26.1, 26.2 ; 126 ;

226.1, 226.2) est disposé entre le réseau d'émission (25 ; 125 ; 225) et le système détecteur (22.1, 22.2 ; 222.1, 222.2), par l'intermédiaire duquel il se produit une formation d'image du réseau d'émission (25 ; 125 ; 225) dans l'agencement périodique de sources lumineuses ponctuelles (27 ; 127 ; 227) dans le plan de détection (D).

2. Dispositif de mesure de position selon la revendication 1, dans lequel un module optique (23 ; 123 ; 223) constitué d'un substrat de support transparent (23.1 ; 123.1 ; 223.1) est disposé dans l'unité de balayage (20 ; 220), au-dessus du système détecteur (22.1, 22.2 ; 222.1, 222.2), dans lequel le réseau d'émission (25 ; 125 ; 225) est réalisé de manière à être intégré également en tant que l'au moins un élément optique (26.1, 26.2 ; 126 ; 226.1, 226.2).

3. Dispositif de mesure de position selon la revendication 2, dans lequel le réseau d'émission (25 ; 125 ; 225) ainsi que l'au moins un élément optique (26.1, 25.2 ; 126 ; 226.1, 226.2) sont disposés sur la face supérieure et/ou inférieure du substrat de support (23.1 ; 123.1 ; 223.1).

4. Dispositif de mesure de position selon la revendication 3, dans lequel

- le réseau d'émission (25 ; 125) est disposé sur la face supérieure du substrat de support (23.1 ; 123.1),
- la source lumineuse primaire (4 ; 124), qui émet dans la direction du réseau d'émission (25 ; 125), est disposée sur le réseau d'émission (25 ; 125), et
- au moins un élément optique (26.2 ; 126) est disposé sur la face inférieure du substrat de support (23.1 ; 123.1).

5. Dispositif de mesure de position selon la revendication 4, dans lequel au moins un élément optique (26.1) est disposé sur la face supérieure du substrat de support (23.1) dans une zone qui n'est pas recouverte par le réseau d'émission (25).

6. Dispositif de mesure de position selon la revendication 3, dans lequel

- le substrat de support (223.1) est disposé à une distance définie au-dessus du système détecteur (222.1, 222.2),
- la source lumineuse primaire (224) est disposée entre le système détecteur (222.1, 222.2) et le substrat de support (223.1) et émet dans la direction du substrat de support (223.1),
- le réseau d'émission (225) est disposé sur la face inférieure du substrat de support (223.1),

- au moins un élément optique (226.1) est disposé sur la face supérieure du substrat de support (223.1).

7. Dispositif de mesure de position selon la revendication 6, dans lequel au moins un autre élément optique (226.2) est disposé sur la face inférieure de l'élément de support (223.1) dans une zone qui n'est pas recouverte (225) par le réseau d'émission.

8. Dispositif de mesure de position selon la revendication 1, dans lequel l'élément optique (126 ; 26.1, 26.2 ; 226.1, 226.2) est réalisé sous la forme d'un élément optique de réfraction ou sous la forme d'un élément optique de diffraction.

9. Dispositif de mesure de position selon les revendications 3 et 8, dans lequel l'élément optique (26.1, 26.2 ; 226.1, 226.2) est réalisé sous la forme d'une structure de réseau sur la face supérieure et/ou inférieure du substrat de support (23.1 ; 223.1).

10. Dispositif de mesure de position selon la revendication 1, dans lequel la formation d'image du réseau d'émission (25 ; 125 ; 225) est effectuée dans un agencement périodique de sources lumineuses ponctuelles (27 ; 127 ; 227) dans le plan de détection (D), dans une zone centrale du plan de détection (D) dans laquelle n'est placé aucun système détecteur (22.1, 22.2 ; 222.1, 222.2).

11. Dispositif de mesure de position selon la revendication 1, dans lequel

   - l'étalon de réflexion (10 ; 210) comprend une graduation incrémentale périodique s'étendant dans la direction de mesure (x),
   - le réseau d'émission (25 ; 125 ; 225) est réalisé sous la forme d'un réseau périodique, et
   - l'agencement périodique de sources lumineuses ponctuelles (27 ; 127 ; 227) présente, dans le plan de détection (D), une périodicité ($TP_{PLQ}$) qui correspond au double de la périodicité ($TP_M$) de la graduation incrémentale.

12. Dispositif de mesure de position selon la revendication 1, dans lequel

   - l'étalon de réflexion (10 ; 210) comprend une graduation incrémentale périodique s'étendant dans la direction de mesure (x),
   - le réseau d'émission (25 ; 125 ; 225) est réalisé sous la forme d'un, réseau périodique, et
   - la périodicité du réseau d'émission (25 ; 125 ; 225) est réalisée conformément à :

$$P_{SG} = 2 \cdot P_M / \beta$$

où

$P_{SG}$ = périodicité du réseau d'émission
$P_M$ = périodicité de la graduation incrémentale,
$\beta$ = échelle de formation d'image de l'élément optique.

FIG. 1a

10

24
24.1  26.1
25
23.1
23

22.3                                    22.3

26.2

20

21            27        22

Z
Y ⊗ → X

FIG. 1b

22   22.1   24        23              22.3

FIG. 1a                                    FIG. 1a

20

22.3   22.2   24.2        21

Y
Z ⊗ → X

FIG. 2a

FIG. 2b

26.2

23.1

FIG. 2c

25

26.1

23.1

FIG. 3a

FIG. 3b

FIG. 4a

FIG. 4b

FIG. 5

FIG. 6a

FIG. 6b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2005023450 A1
- DE 102006021017 A1

- US 20040155178 A1